# EUROPÄISCHE PATENTSCHRIFT

(11) **EP 3 561 364 B1**
(45) Veröffentlichungstag und Bekanntmachung des Hinweises auf die Patenterteilung: **10.06.2020**
(21) Anmeldenummer: 19020024.6
(22) Anmeldetag: 16.01.2019
(51) Int. Cl.: F16M 11/18, B60R 11/04, F16M 11/10, G03B 17/56, G03B 37/04

(54) **EINRICHTUNG ZUR JUSTIERUNG EINES KAMERAWINKELS SOWIE VERWENDUNG EINER DERARTIGEN EINRICHTUNG**
DEVICE FOR ADJUSTING A CAMERA ANGLE AND USE OF SUCH A DEVICE
DISPOSITIF D'AJUSTEMENT D'UN ANGLE DE CAMÉRA AINSI QU'UTILISATION D'UN TEL DISPOSITIF

(30) Priorität: 27.04.2018 DE 102018110257
(43) Veröffentlichungstag der Anmeldung: 30.10.2019
(73) Patentinhaber: Dr.Ing. h.c. F. Porsche Aktiengesellschaft, 70435 Stuttgart (DE)
(72) Erfinder: Huschka, Adrian, 73779 Deizisau (DE)

(56) Entgegenhaltungen:
- WO-A1-2013/060369
- US-A- 3 156 196
- US-A1- 2003 001 963

## Beschreibung

Die Erfindung betrifft eine Einrichtung zur Justierung eines Kamerawinkels, wobei die Einrichtung eine stationäre Halterung, eine in dieser schwenkbar gelagerte Drehplatte und ein Einstellmittel zum schwenkenden Verstellen der Position der Drehplatte relativ zur Halterung aufweist, wobei an der Drehplatte eine Kamera anordenbar ist sowie das Einstellmittel eine axial festgelegte Einstellschraube und eine Buchse aufweist, wobei durch Verdrehen der Einstellschraube die Buchse eine Relativbewegung zur Einstellschraube durchführt, wobei die Buchse einen Vorsprung aufweist, der in eine Aufnahme eingreift.

In modernen Kraftfahrzeugen werden zur Erfassung der Verkehrssituation elektronische Kameras verwendet, die von außen unsichtbar in einem Frontkühlergrill angeordnet sind. Um eine uneingeschränkte Bilderfassung zu gewährleisten, ist bei bekannten Einrichtungen eine Einstellbarkeit der Kamera möglich. Hierbei findet eine Einrichtung zur Justierung eines Kamerawinkels Verwendung.

Eine Einrichtung zur Justierung eines Kamerawinkels ist aus Dokument WO2013/060369 A1 bekannt.

Eine Einrichtung der eingangs genannten Art ist aus der DE 10 2012 214 326 A1 bekannt. Bezogen auf Koordinaten des Fahrzeugs, nämlich X-Achse in Fahrzeuglängsrichtung, Y-Achse in Fahrzeugquerrichtung und Z-Achse in Fahrzeughochrichtung ist bei dieser Einrichtung die Drehplatte um die Z-Achse schwenkbar gegenüber der Halterung. Über das Einstellmittel wird hierbei eine horizontale Blickrichtung der Kamera eingestellt. Im Detail weist die Halterung einen Zapfen auf, der eine Schwenkachse in Richtung der Z-Achse für die Drehplatte bildet. Die Halterung weist an einer Seite eine Drehlagerung für eine in dieser axial festgelegte Einstellschraube auf. Die Einstellschraube ist in eine Buchse eingeschraubt, welche ihrerseits gelenkig in einer gabelförmigen Aufnahme an der Drehplatte angebracht und mit dieser verclipst ist. Durch Verdrehen der Einstellschraube kann so die Drehplatte gegenüber der Halterung verschwenkt werden.

In der DE 10 2015 119 710 A1 ist eine Vorrichtung zum Befestigen eines optischen Sensors beschrieben. Die Vorrichtung weist eine Justiereinrichtung mit einer Einstellschraube auf, durch die die Neigung des Sensors einstellbar ist.

Aufgabe der vorliegenden Erfindung ist es, eine Einrichtung der eingangs genannten Art so weiterzubilden, dass eine besonders genaue Justierung des Kamerawinkels möglich ist. Es ist ferner Aufgabe der Erfindung, für diese Einrichtung eine vorteilhafte Verwendung anzugeben.

Gelöst wird die Aufgabe durch eine Einrichtung, die die Merkmale des Patentanspruchs 1 aufweist. Die vorteilhafte Verwendung dieser Einrichtung ist Gegenstand des Patentanspruchs 9.

Bei der erfindungsgemäßen Einrichtung ist vorgesehen, dass die Aufnahme als Kulisse ausgebildet ist, in die der Vorsprung eingreift, wobei bei Bewegung des mindestens einen Vorsprungs entlang der Kulisse die Drehplatte die Relativbewegung zur Halterung durchführt.

Ein aufgrund der Verdrehung der Einstellschraube erzeugter Stellweg der Buchse relativ zur axial festgelegten Einstellschraube führt somit nicht zu einer entsprechenden Relativbewegung zwischen Drehplatte und Halter, sondern es wird die Bewegung der Buchse über die Kulisse übertragen. Die Kulisse bedingt, dass die Justierung des Kamerawinkels wesentlich feiner erfolgen kann, somit eine besonders genaue Justierung des Kamerawinkels möglich ist.

Es ist insbesondere vorgesehen, dass die Einstellschraube in der Halterung gelagert ist und die Kulisse in der Drehplatte gelagert ist. Diese Gestaltung ist unter der baulichen Kompaktheit der Einrichtung von Vorteil. Grundsätzlich bestünde aber auch die Möglichkeit, die Einstellschraube in der Drehplatte zu lagern und die Kulisse in der Halterung anzuordnen.

Vorzugsweise ist die Drehachse der Einstellschraube parallel zur Drehachse der Drehplatte angeordnet. Hierdurch ergeben sich besonders einfache geometrische Verhältnisse und damit auch eine baulich besonders einfache Gestaltung. Grundsätzlich wäre es aber auch durchaus möglich, die Drehachse der Einstellschraube geneigt zur Drehachse der Drehplatte anzuordnen. Dies kann insbesondere dann von Vorteil sein, wenn bauliche Vorgaben des Kraftfahrzeugs in der Nachbarschaft der Einrichtung zu berücksichtigen sind. Ist die Drehachse der Einstellschraube parallel zur Drehachse der Drehplatte, sind diese Drehachsen somit in derselben Ebene angeordnet. Ist die Drehachse der Einstellschraube geneigt zur Drehachse der Drehplatte angeordnet, wird es als vorteilhaft angesehen, wenn der Neigungswinkel maximal 40°, vorzugsweise 20° bis 40°, insbesondere 30° beträgt. Vorzugsweise sind die zueinander nicht parallelen Drehachsen in derselben Ebene angeordnet.

Die Neigung der Kulisse ist vorzugsweise linear, sodass der Stellweg der Buchse proportional dem Schwenkwinkel der Drehplatte relativ zur Halterung ist. Es wird als vorteilhaft angesehen, wenn die Kulisse unter einem Winkel von 20° bis 30°, insbesondere von 25° zur Drehachse der Einstellschraube angeordnet ist. Diese relativ steile Anordnung der Kulisse gewährleistet eine ausreichend feine Justierung des Kamerawinkels, da ein relativ großer Verstellweg der Buchse für einen relativ kleinen Schwenkwinkel der Drehplatte bezüglich der Halterung erforderlich ist. Dies ist auch unter dem Aspekt einer unbeabsichtigten Verdrehung von Drehplatte und Halterung wegen der Neigung der Kulisse von Vorteil.

Gemäß einer bevorzugten Weiterbildung der Erfindung ist vorgesehen, dass die Drehachse der Drehplatte einer Objektivlängsachse der an der Drehplatte anordenbaren Kamera entspricht. Durch Drehen der Einstellschraube lässt sich somit die Kamera um deren Objektivlängsachse schwenken. Diese Objektivlängsachse ist in aller Regel die X-Achse des Fahrzeugs. Mittels der Einrichtung lässt sich somit der Kamerawinkel präzise bezüglich eines Kamerabildes justieren, das rechteckig ist, mit einer unteren und oberen Begrenzung in Y-Richtung und den beiden seitlichen Begrenzungen in Z-Richtung.

Es wird unter baulichen Gesichtspunkten als besonders vorteilhaft angesehen, wenn die Buchse zwei Vorsprünge aufweist, die auf abgewandten Seiten der Buchse angeordnet sind, wobei der eine Vorsprung in eine gerade Führung der Halterung eingreift und der andere Vorsprung eine andere gerade Führung der Halterung durchsetzt und in die Kulisse eingreift. Hierdurch ist nicht nur eine Verdrehsicherung der Buchse sichergestellt, sondern auch eine präzise Führung in der Kulisse.

Gemäß der besonderen Verwendung der Einrichtung ist vorgesehen, dass die Einrichtung in einem Frontbereich eines Kraftfahrzeugs angeordnet ist, wobei eine mit der Einrichtung verbundene Kamera hinter einer frontseitigen Öffnung in einem Frontbauteil des Kraftfahrzeugs angeordnet ist und die Justierung des Kamerawinkels bezüglich einer Objektivlängsachse der Kamera mittels der von der Vorderseite oder der Rückseite des Frontbauteils zugänglichen Einstellschraube erfolgt. Bei diesem Frontbauteil handelt es sich insbesondere um einen Kühlergrill des Kraftfahrzeugs. Die besondere Verwendung bezieht sich somit auf die Justierung des Kamerawinkels bezüglich der Objektivlängsachse der Kamera.

Weitere Merkmale der Erfindung ergeben sich aus den Unteransprüchen, der beigefügten Zeichnung und der Beschreibung der in der Zeichnung wiedergegebenen Ausführungsbeispiele, ohne hierauf beschränkt zu sein.

Es zeigt:
- Fig. 1: ein erstes Ausführungsbeispiel der Einrichtung in einer räumlichen Darstellung, mit einer Kamera veranschaulicht,
- Fig. 2: ein Detail der Anordnung gemäß Fig. 1 im Bereich einer stationären Halterung und eines Einstellmittels, veranschaulicht in einer räumlichen Darstellung,
- Fig. 3: eine Bestandteil des Einstellmittels bildende Buchse, veranschaulicht in einer räumlichen Darstellung, bei gegenüber der Gebrauchslage um 90° gedrehter Anordnung,
- Fig. 4: die Anordnung gemäß Fig. 1 in einer Unteransicht, veranschaulicht in einer räumlichen Darstellung,
- Fig. 5: die Einrichtung in einer Seitenansicht, veranschaulicht in einer Enddrehstellung der Drehplatte,
- Fig. 6: die Einrichtung in einer Seitenansicht, veranschaulicht in einer Mitteldrehung der Drehplatte,
- Fig. 7: die Einrichtung in einer Seitenansicht, veranschaulicht in einer anderen Endstellung der Drehplatte,
- Fig. 8: in einer räumlichen Darstellung ein zweites Ausführungsbeispiel der Einrichtung, mit Kamera veranschaulicht,
- Fig. 9: die Einrichtung gemäß Fig. 8 in einer Seitenansicht.

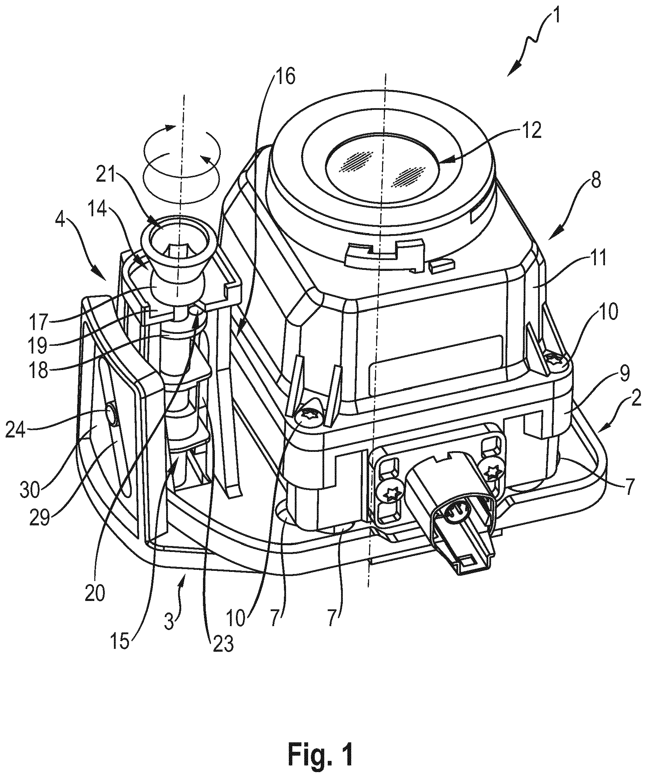

Die Fig. 1 bis 7 veranschaulichen ein erstes Ausführungsbeispiel einer Einrichtung 1 zur Justierung eines Kamerawinkels. Die Einrichtung 1 weist eine stationäre Halterung 2, eine in dieser schwenkbar gelagerte Drehplatte 3 und ein Einstellmittel 4 zum schwenkenden Verstellen der Position der Drehplatte 3 relativ zur Halterung 2 auf.

Die Drehplatte 3 weist eine zentrale Durchgangsöffnung 5 mit Kreisquerschnitt auf, in die ein Ansatz 6 der Halterung 2 angepasst eingreift. Hierdurch ist eine Drehachse der Drehplatte 5 bezüglich der Halterung 2 gebildet. Bezogen auf ein Koordinatensystem eines Personenkraftwagens mit dessen Fahrzeuglängsrichtung X, Fahrzeugquerrichtung Y und Fahrzeughochrichtung Z verläuft diese Drehachse in X-Richtung. Konzentrisch zu der zentralen Durchgangsöffnung 5 weist die Halterung 2 vier längliche Löcher 7 auf. Mit der Drehplatte 3 ist eine Kamera 8 befestigt. Bezüglich dieser Kamera 8 ist ein Kameragehäuse 9, ein mit diesem über Schrauben 10 verbundener Gehäusedeckel 11 sowie ein Objektiv 12 veranschaulicht, wobei dieses Objektiv 12 im Bereich einer Öffnung des Gehäusedeckels 11 angeordnet ist. Hierbei entspricht eine Längsachse des Objektivs 12 der Drehachse der Drehplatte 3 in der Halterung 2. Die Objektivlängsachse ist somit in X-Richtung angeordnet.

Das Kameragehäuse 9 ist mittels vier Schrauben 13 mit der Drehplatte 3 verschraubt. Hierbei durchsetzen die Schrauben 13 die Löcher 7 in der Halterung 2. Da die Kamera 8 mit der Drehplatte 3 verbunden ist, kann sich die Kamera 8 zusammen mit der Drehplatte 3 verdrehen. Auf der unbeweglichen Halterung 2 kann die Kamera 8 im Bereich deren Kameragehäuse 9 gleiten.

Verschwenkbar ist die Drehplatte 3 bezüglich der stationären Halterung 2 durch das Einstellmittel 4. Dieses weist eine axial festgelegte Einstellschraube 14 und eine Buchse 15 auf, die die Funktion einer Führungsbuchse aufweist. Durch Verdrehen der Einstellschraube 14 führt die Buchse 15 eine Relativbewegung zur Einstellschraube 14 durch.

Im Detail weist die Halterung 2 einen Lageransatz 16 auf, in dem die Einstellschraube 14 drehbar, allerdings axial festgelegt gelagert ist. Die Drehachse der Einstellschraube 14 verläuft hierbei in X-Richtung. In einem Kopfbereich weist die Einstellschraube 14 zwei wulstartige radiale Vorsprünge 17, 18 auf, die zwischen sich spielfrei eine Lagerplatte 19 des Lageransatzes 16 aufnehmen. Dort ist die Einstellschraube 14 in eine Rastnut 20 der Lagerplatte 19 eingesteckt, sodass die Einstellschraube 14 in Y- und Z-Richtung in der Lagerplatte 19 gehalten und nur bezüglich dieser drehbar ist. Ein der Drehplatte 3 abgewandtes Ende der Einstellschraube 7 ist mit einer Aufnahme 21, die einen Innensechskant aufweist, versehen, zum Einstecken eines Werkzeugs zwecks Drehen der Einstellschraube 14.

Die Einstellschraube 14 weist, ausgehend vom Vorsprung 18, bis zu ihrem der Aufnahme 21 abgewandten Endes ein Gewinde 22 auf. Im Gewindebereich ist die Einstellschraube 14 in die Buchse 15 eingeschraubt. Die Buchse 15 weist zwei in Y-Achsrichtung angeordnete, auf einer identischen Achse angeordnete, unterschiedlich lange Vorsprünge auf, nämlich einen kurzen Vorsprung 23 und einen langen Vorsprung 24. Diese sind zylindrisch ausgebildet. Der Lageransatz 16 weist zwei Schenkel 25, 26 auf, die parallel zueinander angeordnet sind und parallel zueinander angeordnete, in X-Richtung verlaufende Langlöcher 27, 28 aufweisen, in denen der jeweilige Vorsprung 23 bzw. 24 geführt ist. Der lange Vorsprung 24 steht über das Langloch 28 hervor und greift in seinem hervorstehenden Bereich in eine Kulisse 29 ein, die in einem Lageransatz 30 der Drehplatte 3 ausgebildet ist. Die Kulisse 29 ist in einer gekrümmten Ebene konzentrisch zur Drehachse der Drehplatte 3 in der Halterung 2 angeordnet. Der Verlauf der Kulisse 29 ist linear, wobei hierunter verstanden wird, dass die lineare Verstellung der Buchse 15 zu einer proportionalen Drehung der Drehplatte 3 bezüglich der Halterung 2 aufgrund der Kulisse 29 führt. Die Kulisse 29 ist unter einem Winkel von 20° bis 30°, insbesondere von 25° zur Drehachse der Einstellschraube 14 angeordnet.

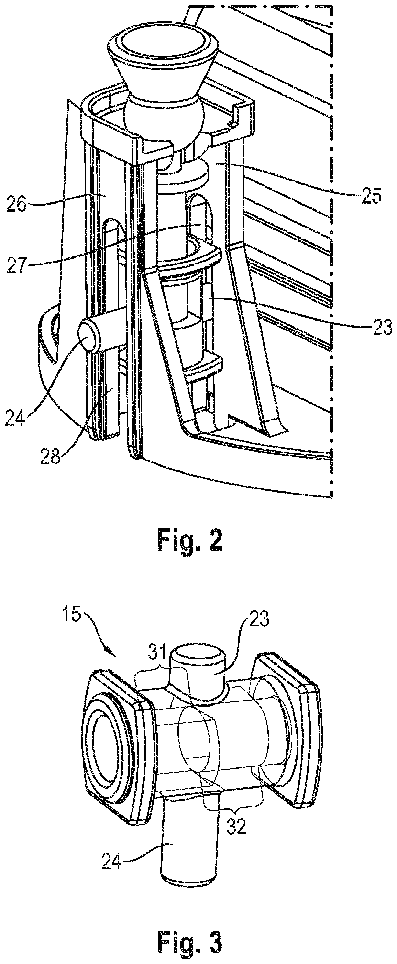

Fig. 3 veranschaulicht, dass sich in der Buchse 15 zwei Gewinde, nämlich Gewinde 31 und 32 befinden. Der Gewindegang des Gewindes 32 ist versetzt zu dem Gewindegang des Gewindes 31. Durch die dabei entstehende Klemmkraft wird verhindert, dass sich die Buchse 15 von alleine auf der Einstellschraube 14 bewegt.

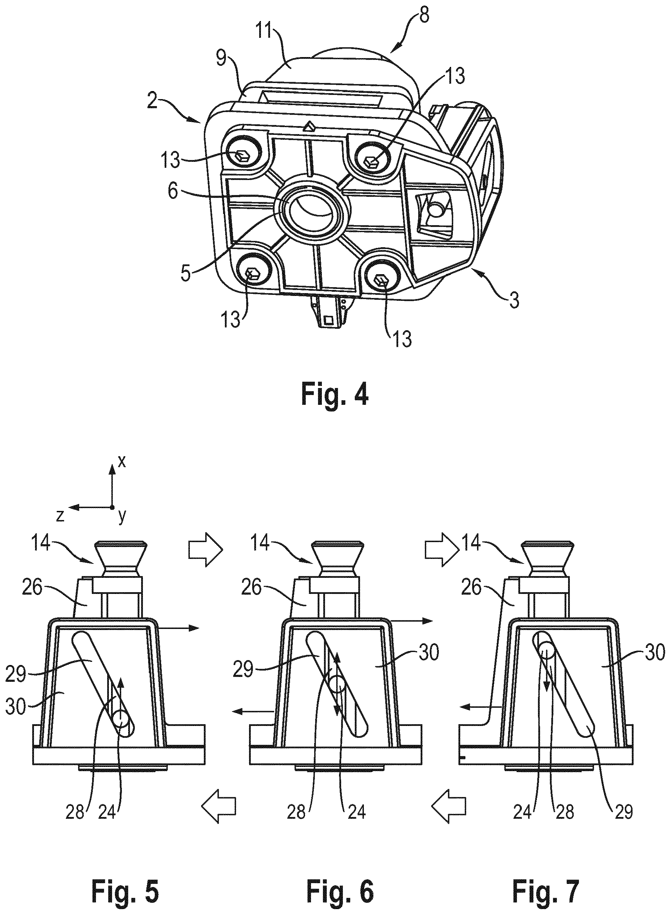

Die Fig. 5 bis 7 zeigen drei unterschiedliche Drehstellungen der Drehplatte 3 und damit der Kamera 8 bezüglich der Halterung 2. In diesen Figuren ist die Kamera 8 nicht mit veranschaulicht. In der in Fig. 5 gezeigten Position der Buchse 15, in der sich diese weitreichend unten befindet, nimmt die Drehplatte 3 eine erste Extremdrehstellung bezüglich der Halterung 2 ein. In der Stellung gemäß Fig. 6 befindet sich die Buchse 15 auf halter Höhe, sodass die Drehplatte 3 eine Mitteldrehstellung bezüglich der Halterung 2 einnimmt. In der Stellung gemäß Fig. 7 befindet sich die Buchse 15 in ihrer oberen Endstellung, sodass die Drehplatte 9 die andere, entgegengesetzte Extremdrehstellung zur Halterung 2 einnimmt. Entsprechend den Drehstellungen der Drehplatte 3 wird die Kamera 8 um die X-Achse geschwenkt.

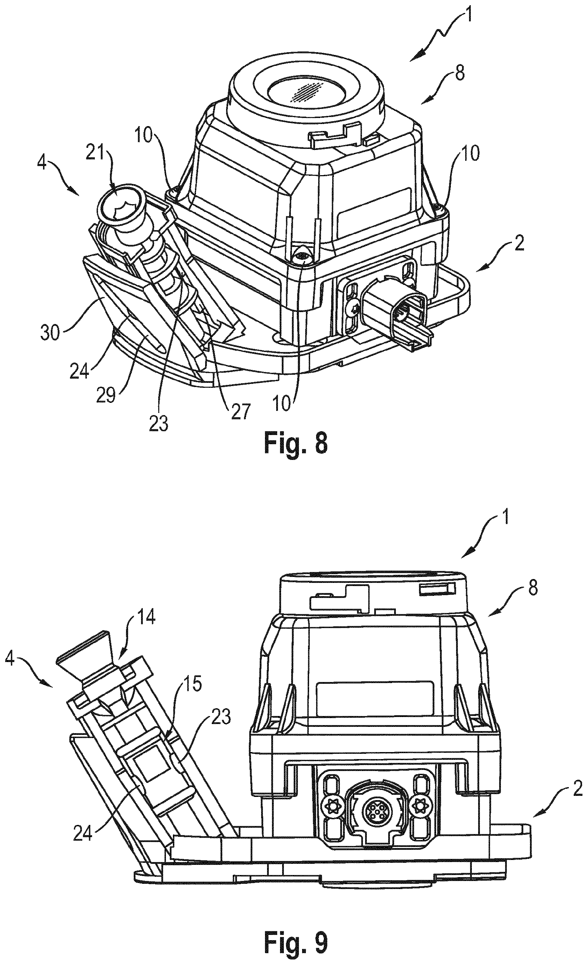

Das in den Fig. 8 und 9 veranschaulichte zweite Ausführungsbeispiel unterscheidet sich von dem ersten Ausführungsbeispiel nur dadurch, dass die Einstellschraube 14 nicht in X-Richtung angeordnet ist, sondern bezüglich dieser Richtung geneigt angeordnet ist. Die Drehachse der Einstellschraube 14 ist somit geneigt zur Drehachse der Drehplatte 3 angeordnet. Hierbei beträgt der Neigungswinkel maximal 40°, vorzugsweise 20° bis 40°, insbesondere 30°. Entsprechend dieser Neigung der Einstellschraube 14 ist auch der Lageransatz 16, der der Aufnahme der Einstellschraube 14 und der Buchse 15 dient, ferner der Lageransatz 30 mit der Kulisse 29 geneigt. Im Übrigen wird auf die Ausführungen zum ersten Ausführungsbeispiel verwiesen.

### Bezugszeichenliste

- 1: Einrichtung
- 2: Halterung
- 3: Drehplatte
- 4: Einstellmittel
- 5: Durchgangsöffnung
- 6: Ansatz
- 7: Loch
- 8: Kamera
- 9: Kameragehäuse
- 10: Schraube
- 11: Gehäusedeckel
- 12: Objektiv
- 13: Schraube
- 14: Einstellschraube
- 15: Buchse
- 16: Lageransatz
- 17: Vorsprung
- 18: Vorsprung
- 19: Lagerplatte
- 20: Rastnut
- 21: Aufnahme
- 22: Gewinde
- 23: Vorsprung
- 24: Vorsprung
- 25: Schenkel
- 26: Schenkel
- 27: Langloch
- 28: Langloch
- 29: Kulisse
- 30: Lageransatz
- 31: Gewinde
- 32: Gewinde

## Patentansprüche

1. Einrichtung (1) zur Justierung eines Kamerawinkels, wobei die Einrichtung (1) eine stationäre Halterung (2), eine in dieser schwenkbar gelagerte Drehplatte (3) und ein Einstellmittel (4) zum schwenkenden Verstellen der Position der Drehplatte (3) relativ zur Halterung (2) aufweist, wobei an der Drehplatte (3) eine Kamera (8) anordenbar ist, **dadurch gekennzeichnet dass** das Einstellmittel (4) eine axial festgelegte Einstellschraube (14) und eine Buchse (15) aufweist, wobei durch Verdrehen der Einstellschraube (14) die Buchse (15) eine Relativbewegung zur Einstellschraube (14) durchführt, wobei die Buchse (15) einen Vorsprung (24) aufweist, der in eine Aufnahme (29) eingreift, **dadurch gekennzeichnet, dass** die Aufnahme (29) als Kulisse ausgebildet ist, in die der Vorsprung (24) eingreift, wobei bei Bewegung des Vorsprungs (24) entlang der Kulisse (29) die Drehplatte (3) die Relativbewegung zur Halterung (2) durchführt.

2. Einrichtung nach Anspruch 1, **dadurch gekennzeichnet, dass** die Einstellschraube (14) in der Halterung (2) gelagert und die Kulisse (29) in der Drehplatte (3) angeordnet ist.

3. Einrichtung nach Anspruch 1 oder 2, **dadurch gekennzeichnet, dass** die Drehachse der Einstellschraube (14) parallel oder geneigt zur Drehachse der Drehplatte (3) angeordnet ist.

4. Einrichtung nach Anspruch 3, **dadurch gekennzeichnet, dass** bei zueinander geneigter Anordnung der Drehachsen von Einstellschraube (14) und Drehplatte (3) diese Drehachsen in derselben Ebene angeordnet sind.

5. Einrichtung nach Anspruch 3 oder 4, **dadurch gekennzeichnet, dass** bei geneigt zur Drehachse der Drehplatte (3) angeordneter Einstellschraube der Neigungswinkel maximal 40°, vorzugsweise 20° bis 40°, insbesondere 30° beträgt.

6. Einrichtung nach einem der Ansprüche 1 bis 5, **dadurch gekennzeichnet, dass** die Kulisse (29) linear ausgebildet ist, vorzugsweise die Kulisse (29) unter einem Winkel von 20° bis 30°, insbesondere unter einem Winkel von 25° zur Drehachse der Einstellschraube (14) angeordnet ist.

7. Einrichtung nach einem der Ansprüche 1 bis 6, **dadurch gekennzeichnet, dass** die Drehachse der Drehplatte (3) einer Objektivlängsachse der an der Drehplatte (3) anordenbaren Kamera (8) entspricht.

8. Einrichtung nach einem der Ansprüche 1 bis 7, **dadurch gekennzeichnet, dass** die Buchse (15) zwei Vorsprünge (23, 24) aufweist, die auf abgewandten Seiten der Buchse (15) angeordnet sind, wobei der eine Vorsprung (23) in eine gerade Führung (27) der Halterung (2) eingreift und der andere Vorsprung (24) eine andere gerade Führung (28) der Halterung (2) durchsetzt und in die Kulisse (29) eingreift.

9. Verwendung der Einrichtung (1) gemäß einem der Ansprüche 1 bis 8 in einem Frontbereich eines Kraftfahrzeugs, wobei eine mit der Einrichtung (1) verbundene Kamera (8) hinter einer frontseitigen Öffnung in einem Frontbauteil des Kraftfahrzeugs angeordnet ist und die Justierung des Kamerawinkels bezüglich einer Objektivlängsachse der Kamera (8) mittels einer von der Vorderseite oder der Rückseite des Frontbauteils zugänglichen Einstellschraube (14) erfolgt.

## Claims

1. Device (1) for adjusting a camera angle, wherein the device (1) has a stationary holder (2), a rotary plate (3) mounted pivotably therein, and an adjusting means (4) for pivotably adjusting the position of the rotary plate (3) relative to the holder (2), wherein a camera (8) can be arranged on the rotary plate (3), **characterized in that** the adjusting means (4) has an axially fixed adjusting screw (14) and a bushing (15), wherein the bushing (15) carries out a relative movement with respect to the adjusting screw (14) by turning the adjusting screw (14), wherein the bushing (15) has a projection (24) which engages in a receptacle (29), **characterized in that** the receptacle (29) takes the form of a slot in which the projection (24) engages, wherein, upon a movement of the projection (24) along the slot (29), the rotary plate (3) carries out the relative movement with respect to the holder (2).

2. Device according to Claim 1, **characterized in that** the adjusting screw (14) is mounted in the holder (2), and the slot (29) is arranged in the rotary plate (3).

3. Device according to Claim 1 or 2, **characterized in that** the axis of rotation of the adjusting screw (14) is arranged parallel or at an inclination to the axis of rotation of the rotary plate (3).

4. Device according to Claim 3, **characterized in that**, with a mutually inclined arrangement of the axes of rotation of the adjusting screw (14) and rotary plate (3), these axes of rotation are arranged in the same plane.

5. Device according to Claim 3 or 4, **characterized in that**, with the adjusting screw arranged at an inclination to the axis of rotation of the rotary plate (3), the angle of inclination is at most 40°, preferably 20° to 40°, in particular 30°.

6. Device according to one of Claims 1 to 5, **characterized in that** the slot (29) is formed linearly, with preferably the slot (29) being arranged at an angle of 20° to 30°, in particular at an angle of 25°, to the axis of rotation of the adjusting screw (14).

7. Device according to one of Claims 1 to 6, **characterized in that** the axis of rotation of the rotary plate (3) corresponds to an objective longitudinal axis of the camera (8) which can be arranged on the rotary plate (3).

8. Device according to one of Claims 1 to 7, **characterized in that** the bushing (15) has two projections (23, 24) which are arranged on opposed sides of the bushing (15), wherein the one projection (23) engages in a rectilinear guide (27) of the holder (2), and the other projection (24) traverses another rectilinear guide (28) of the holder (2) and engages in the slot (29).

9. Use of the device (1) according to one of Claims 1 to 8 in a front region of a motor vehicle, wherein a camera (8) connected to the device (1) is arranged behind a front-side opening in a front component of the motor vehicle, and the adjustment of the camera angle with respect to an objective longitudinal axis of the camera (8) occurs by means of an adjusting screw (14) accessible from the front side or the rear side of the front component.

## Revendications

1. Dispositif (1) d'ajustement d'un angle de caméra, le dispositif (1) présentant une fixation stationnaire (2), une plaque tournante (3) supportée de manière pivotante dans celle-ci et un moyen d'ajustement (4) pour le réglage par pivotement de la position de la plaque tournante (3) par rapport à la fixation (2), une caméra (8) pouvant être disposée sur la plaque tournante (3),
**caractérisé en ce que**
le moyen d'ajustement (4) présente une vis d'ajustement (14) fixée axialement et une douille (15), la douille (15), sous l'effet de la rotation de la vis d'ajustement (14), effectuant un mouvement relatif par rapport à la vis d'ajustement (14), la douille (15) présentant une saillie (24) qui s'engage dans un logement (29), **caractérisé en ce que** le logement (29) est réalisé sous forme de coulisse dans laquelle s'engage la saillie (24), la plaque tournante (3), lors du déplacement de la saillie (24) le long de la coulisse (29), effectuant le mouvement relatif par rapport à la fixation (2).

2. Dispositif selon la revendication 1, **caractérisé en ce que** la vis d'ajustement (14) est supportée dans la fixation (2) et la coulisse (29) est disposée dans la plaque tournante (3).

3. Dispositif selon la revendication 1 ou 2, **caractérisé en ce que** l'axe de rotation de la vis d'ajustement (14) est disposé parallèlement ou sous forme inclinée par rapport à l'axe de rotation de la plaque tournante (3).

4. Dispositif selon la revendication 3, **caractérisé en ce que**, dans le cas d'un agencement incliné, l'un par rapport à l'autre, des axes de rotation de la vis d'ajustement (14) et de la plaque tournante (3), ces axes de rotation sont disposés dans le même plan.

5. Dispositif selon la revendication 3 ou 4, **caractérisé en ce que**, lorsque la vis d'ajustement est disposée de manière inclinée par rapport à l'axe de rotation de la plaque tournante (3), l'angle d'inclinaison vaut au maximum 40°, de préférence 20° à 40°, en particulier 30°.

6. Dispositif selon l'une quelconque des revendications 1 à 5, **caractérisé en ce que** la coulisse (29) est réalisée sous forme linéaire, de préférence la coulisse (29) est disposée suivant un angle de 20° à 30°, en particulier suivant un angle de 25° par rapport à l'axe de rotation de la vis d'ajustement (14).

7. Dispositif selon l'une quelconque des revendications 1 à 6, **caractérisé en ce que** l'axe de rotation de la plaque tournante (3) correspond à un axe longitudinal d'objectif de la caméra (8) pouvant être disposée sur la plaque tournante (3).

8. Dispositif selon l'une quelconque des revendications 1 à 7, **caractérisé en ce que** la douille (15) présente deux saillies (23, 24) qui sont disposées sur des côtés opposés de la douille (15), l'une des saillies (23) s'engageant dans un guide droit (27) de la fixation (2) et l'autre saillie (24) traversant un autre guide droit (28) de la fixation (2) et s'engageant dans la coulisse (29).

9. Utilisation du dispositif (1) selon l'une quelconque des revendications 1 à 8 dans une région avant d'un véhicule automobile, une caméra (8) connectée au dispositif (1) étant disposée derrière une ouverture du côté avant dans un composant avant du véhicule automobile, et l'ajustement de l'angle de caméra par rapport à un axe longitudinal d'objectif de la caméra (8) s'effectuant au moyen d'une vis d'ajustement (14) accessible depuis le côté avant ou le côté arrière du composant avant.
